# EUROPEAN PATENT APPLICATION

(11) **EP 3 324 598 A1**
(43) Date of publication of application: **23.05.2018**
(21) Application number: 17202781.5
(22) Date of filing: 21.11.2017
(51) Int. Cl.: H04L 29/06, G06Q 20/28, H04M 17/00

(54) **RECHARGE METHOD AND RECHARGE DEVICE**

(30) Priority: 22.11.2016 CN 201611031699
(71) Applicant: Beijing Xiaomi Mobile Software Co., Ltd., Beijing 100085 (CN)
(72) Inventor: XIE, Yan, Beijing, 100085 (CN)
(74) Representative: dompatent von Kreisler Selting Werner - Partnerschaft von Patent- und Rechtsanwälten mbB

(57) **Abstract**

The present disclosure relates to a recharge method and a recharge device. The recharge method includes: monitoring (S101) a balance of a living expense account, wherein the living expense account is an account for obtaining life service resources by paying fees, and the balance is indicative of remaining funds in the living expense account and/or a remaining amount of the life service resources in the living expense account; and recharging (S102) the living expense account according to a preset recharge path when the balance is less than or equal to a preset threshold value. According to the method of the present disclosure, recharge of the living expense account can be automatically completed and it can be avoided a situation that the life service resource may be forcibly interrupted when users forget to recharge, which greatly facilitates users.

## Description

### TECHNICAL FIELD

The present disclosure relates to the field of communication, and more particularly, to a recharge method and a recharge device.

### BACKGROUND

With the continuous development of social economy, mobile phones, tablet PCs and other mobile terminals become indispensable tools in daily life, and a variety of different applications (referred to as APP) loaded in the mobile terminals bring lots of convenience for people's life.

In particular, with occurrences of WeChat™, Taobao™ and other APPs having a living expense payment function, users can manually pay living expense related to electricity, water, gas, network, telephone and other expenses through these APPs. Taking paying water fee as an example, a user can add his/her water account in the APP, and advance a certain amount to the account as pre-paid water fee via the APP. The hydraulic department may regularly deduct corresponding water fee from the account based on the user's actual use. Also, the user can log on the water account manually to query the current remaining water balance, and manually recharge the water account in accordance with the user's needs.

However, water supply may be cut off when the user forgets to check the water account to recharge the water account timely, or the user will not recharge the water account until the user realizes the water balance is insufficient. Since water supply may be cut off before the recharge, users always experience a lot of inconvenience from this payment mode.

### SUMMARY

Accordingly, the present disclosure provides a recharge method and a recharge device in accordance with claims which follow.

According to a first aspect of embodiments of the disclosure, there is provided a recharge method, includes:
monitoring a balance of a living expense account, wherein the living expense account is an account for obtaining life service resources by paying fees, and the balance is indicative of remaining funds in the living expense account and/or a remaining amount of the life service resources in the living expense account; and
recharging the living expense account according to a preset recharge path when the balance is less than or equal to a preset threshold value.

The embodiment of the present disclosure provides a technical solution having following advantageous effects. The recharge of the living expense account can be automatically performed by monitoring the balance of user's living expense account and automatically recharging it according to a preset recharge path when the balance is less than or equal to the preset threshold, so as to avoid the situation that the life service resource may be forcibly interrupted when the user forgets to recharge, which greatly facilitates users' life.

Further, the charging the living expense account according to a preset recharge path includes:
sending a recharge command carrying a preset recharge value to a pre-associated payment platform to instruct the pre-associated payment platform to recharge the living expense account with a recharge amount corresponding to the preset recharge value.

Optionally, the pre-associated payment platform includes any of the following:
a financial server corresponding to a default financial account; and a network server corresponding to an application APP having a payment function.

The embodiment of the present disclosure provides a technical solution having following advantageous effects. If it is determined the obtained balance of living expense account is less than or equal to the preset threshold, a recharge command carrying the preset recharge value will be sent automatically to the pre-associated payment platform. The recharge command can be used to automatically recharge the living expense account according to the preset recharge value, so that the recharge of the living expense account can be automatically completed. It avoids the situation that the life service resource may be forcibly interrupted when the user forgets to recharge, which greatly facilitates users' life and improves the user experience. In addition, security and convenience of the payment can be ensured by paying through the payment platform associated in advance. Especially when the payment is achieved through the associated financial accounts or the associated APP having the payment function, the associating process is convenient and user-friendly.

Further, after recharging the living expense account according to a preset recharge path ,the method further includes:
outputting a first prompting message used to indicate the living expense account is recharged.

The embodiment of the present disclosure provides a technical solution having following advantageous effects. According to the present embodiment, the user can be promptly informed of completion of the recharge, which is more user-friendly and can improve the user experience.

Optionally, the first prompting message includes information on the balance of the living expense account after the recharging.

The embodiment of the present disclosure provides a technical solution having following advantageous effects. According to the present embodiment, the user can be promptly informed of situation of the funds or the life service resources in the account after the recharge charge, which is more user-friendly and can improve the user experience.

Still further, the method further includes:
outputting a second prompting message every a preset period, the second prompting message being used to prompt the user of a consumed amount of the living expense account in the preset period, the consumed amount being indicative of a consumption of funds or a consumption of the life service resources in the living expense account.

The embodiment of the present disclosure provides a technical solution having following advantageous effects. According to the present embodiment, the user can be periodically informed of consumption of the funds or life service resources in the living expense account during the period, which is more user-friendly and can improve the user experience.

According to a second aspect of the present disclosure, there is provided a recharge device, includes:
a monitoring module configured to monitor a balance of a living expense account, wherein the living expense account is an account for obtaining life service resources by paying fees, the balance is indicative of remaining funds in the living expense account and/or remaining amount of the life service resources in the living expense account; and
a processing module configured to recharge the living expense account according to a preset recharge path when the monitoring module detects that the balance is less than or equal to a preset threshold.

The embodiment of the present disclosure provides a technical solution having following advantageous effects. According to the present embodiment, the balance of the user's living expense account is monitored through the monitoring module, and the living expense account is recharged by the processing module according to a preset recharge path when the monitoring module monitors that the balance is less than or equal to the preset threshold. Through the present embodiment, the recharge of the living expense account can be automatically completed, so as to avoid the situation that the life service resource may be forcibly interrupted when the user forgets to recharge, which greatly facilitates the user's life.

Further, the processing module includes a first transmit sub-module;
the first transmit sub-module being configured to send a recharge command carrying a preset recharge value to a pre-associated payment platform to instruct the pre-associated payment platform to recharge the living expense account with a recharge amount corresponding to the preset recharge value.

Optionally, the pre-associated payment platform includes any of the following:
a first output module configured to output a first prompting message used to indicate that the living expense account is recharged.

The embodiment of the present disclosure provides a technical solution having following advantageous effects. According to the present embodiment, when the monitoring module detects that the balance of the living expense account is less than or equal to the preset threshold, the processing module instructs the first transmission sub-module to automatically send a recharge command carrying the preset recharge value to the pre-associated payment platform so that the pre-associated payment platform can automatically recharge the life account according to the preset recharge value, so as to automatically complete the recharge of the living expense account, thus it can be avoided the situation that the life service resource may be forcibly interrupted when the user forgets to recharge, which greatly facilitates the user's life and improves the user experience. In addition, security and convenience of the payment can be ensured by paying through the payment platform associated in advance. Especially when the payment is achieved through the associated financial accounts or the associated APP having the payment function, the associating process is convenient and user-friendly.

Still further, the device includes:
a first output module configured to output a first prompting message used to indicate that the living expense account is recharged.

The embodiment of the present disclosure provides a technical solution having following advantageous effects. According to the present embodiment, the user can be promptly informed of completion of the recharge through the first output module, which is more user-friendly and can improve the user experience.

Optionally, the first prompting message includes information on the balance of the living expense account after the recharging.

The embodiment of the present disclosure provides a technical solution having following advantageous effects. According to the present embodiment, the user can be promptly informed of situation of the funds or the life service resources in the account after the recharge charge through the first output module, which is more user-friendly and can improve the user experience.

Still further, the device includes:
a second output module configured to output a second prompting message every a preset period, the second prompting message being used to prompt the user of a consumed amount of the living expense account in the preset period, the consumed amount being indicative of a consumption of the funds or a consumption of the life service resources in the living expense account.

The embodiment of the present disclosure provides a technical solution having following advantageous effects. According to the present embodiment, the user can be periodically informed of consumption of the funds or life service resources in the living expense account during the period through the second output module, which is more user-friendly and can improve the user experience.

According to a third aspect of the present disclosure, there is provided a recharge device, which includes:
a processor; and
a memory configured to store instructions executable by the processor;
wherein, the processor is configured to:
monitor a balance of a living expense account, wherein the living expense account is an account for obtaining life service resources by paying fees, the balance is indicative of remaining funds in the living expense account and/or a remaining amount of the life service resources in the living expense account; and
recharge the living expense account according to a preset recharge path when the balance is less than or equal to the preset threshold value.

According to a fourth aspect of the embodiment of the present disclosure, there is provided a computer program which, when being executed on a processor of a terminal, performs any one of the above methods according to the first aspect.

According to a fifth aspect of the embodiment of the present disclosure, there is provided a computer program which, when being executed on a processor of a smart device, performs any one of the above methods according to the second aspect.

The embodiment of the present disclosure provides a technical solution having following advantageous effects. According to the present embodiment, the balance of the user's living expense account is monitored through the processor, and the living expense account is recharged according to a preset recharge path when the balance is less than or equal to the preset threshold. Through the present embodiment, the recharge of the living expense account can be automatically completed, so as to avoid the situation that the life service resource may be forcibly interrupted when the user forgets to recharge, which greatly facilitates the user's life.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Figure 1 is a flowchart illustrating a recharge method according to an exemplary embodiment;
Figure 2 is a flowchart illustrating a recharge method according to another exemplary embodiment;
Figure 3 is an interface diagram illustrating a prompting message according to an exemplary embodiment;
Figure 4 is a block diagram illustrating a recharge device according to an exemplary embodiment;
Figure 5 is a block diagram illustrating a recharge device according to another exemplary embodiment;
Figure 6 is a block diagram illustrating a recharge device according to yet another exemplary embodiment;
Figure 7 is a block diagram illustrating the structure of a recharge device according to an exemplary embodiment;
Figure 8 is a block diagram illustrating a recharge device 1300 according to an exemplary embodiment.

Throughout the above figures, there have been shown clear embodiments of the present disclosure, which will be described in more detail later. The drawings and textual description are not intended to limit the scope of the present disclosure by any means, but rather to teach those skilled in the art, by reference to specific embodiments, the concepts of the present disclosure.

### DETAILED DESCRIPTION

Hereinafter, exemplary embodiments will be described in detail, examples of which are shown in the drawings. In the following description when referring to the drawings, the same numerals in the different drawings denote the same or similar elements unless otherwise indicated. The embodiments described in the following exemplary embodiments are not representative of all embodiments consistent with the present disclosure. Rather, they are merely examples of devices and methods consistent with some aspects of the disclosure as detailed in the appended claims.

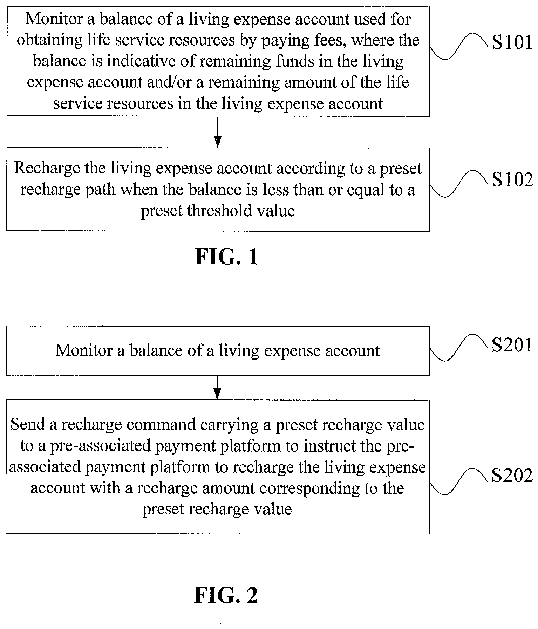

Figure 1 is a flowchart illustrating a recharge method according to an exemplary embodiment. The present embodiment is directed to automatically recharging a living expense account for a user through an application having a payment function, thereby avoiding the situation that the life service resource is forcibly interrupted when the user forgets to recharge the living expense account. As shown in Figure 1, the method includes the steps of S101 and S102.

In step S101, a balance of a living expense account is monitored, wherein the living expense account is an account for obtaining life service resources by paying a fee, and the balance is remaining funds in the living expense account and/or remaining life service resources in the living expense account.

Before introducing the present embodiment, an exemplary application scenario of the present embodiment is briefly described as follows.

In the present embodiment, a plurality of applications having a payment function are provided on the terminal, and network servers of the applications can establish a communication connection with servers of life service departments in advance. For example, a communication connection may be established with a power department server, a water department server, or a cable TV server. Meanwhile, the application will provide users with the interface of each living expense account, and the server of the life service department allows users to pay or recharge to the life service server through the interface provided by the application. For example, in the case of a WeChat™ application, the WeChat™ APP may provide a user with interfaces for adding living expense accounts, which may include one or more of the user's electricity charge account, water charge account, gas charge account, heating charge account, network charge account, cable television charge account and telephone charge account. When a user adds a living expense account to the application, the user can recharge the corresponding living expense account through the application. For example, when the user recharges to the electricity charge account through the application, a power department server located remotely would acquire the recharge amount, so that the payment process is completed by the user. According to the user's actual consumption of electricity, the power department server can automatically deduct the amount from the user's electricity charge account.

Typically, when users need to pay to the life service department through the application, they have to log on the application, and then manually operate the application for the living expense account recharge or payment. However, when the user forgets to check the balance, and doesn't recharge the living expense account in time, it is possible to cause inconvenience to the user's life. For example, when the user forgets to recharge the electricity account, there may be power outages, thus causing a lot of inconvenience to the user's life.

According to embodiments of the present disclosure, it is proposed to automatically monitor the balance of the living expense account. The monitoring process can be performed by a processor or a server. The processor or the server may be any terminal device, for example, a mobile phone, a computer, a personal digital assistant, a wearable device, etc., and the present disclosure is not limited thereto.

The above-mentioned living expense account may be an account related to water, electricity, or others, and the present disclosure is not limited thereto.

In this step, a network server corresponding to the application can establish a communication connection with a server of a service department, and monitor in real time the balance of the living expense account corresponding to the life service department added in the application. In some embodiments, the balances of multiple living expense accounts can be monitored at the same time. Further, it is determined whether the balance of the living expense account is less than or equal to a preset threshold value, and following step S102 is performed when it is determined that the balance of the living expense account is less than or equal to the preset threshold value.

In some embodiments, the step of monitoring the balance of the living expense account may include: sending a query command to a server of a provider providing the life service resource; and receiving the balance of the living expense account from the server of the provider. The query command may include an identifier of the living expense account and is used for requesting the server of the provider to return the balance of the living expense account to the terminal device. In an embodiment, the query command may carry contact information of the terminal device, for example, a phone number.

In some embodiments, the terminal device may send the query command to the server of the provider at a preset time interval. For example, the terminal device may send the query command to the server of the provider every 6 hours. It should be noted that the preset time interval may vary according to different application scenarios. Taking the telephone charge account as an example, the terminal device may automatically send a telephone charge query command or a data traffic query command to an online server every 12 hours.

In some embodiments, the preset time interval can be adjusted according to a consumption rate of the life service resource. In an embodiment, the terminal device may compare two balances of the living expense account obtained at two different times to determine the consumption rate of the life service resource. If a difference between the two balances is less than a first threshold amount, the terminal device may increase the preset time interval, for example, from 6 hours to 12 hours. If the difference between the two balances is greater than a second threshold amount, the terminal device may decrease the preset time interval, for example, from 6 hours to 3 hours. In another embodiment, the terminal device may detect operations relative to the life service resource to determine the consumption rate of the life service resource. If an operation relative to the life service resource lasts a predetermined time or consumes a predetermined amount of the life service resource, the terminal device may decrease the preset time interval. For example, when the terminal device detects that the user called for more than 0.5 hour, the terminal device may automatically send the query command immediately after the time reaches 0.5 hour. In another example, when the terminal device detects that a high-power electrical appliance is being used in the user's house, the terminal device may automatically send the query command after the high-power electrical appliances has run for a predetermined time period.

In some embodiments, the step of monitoring a balance of a living expense account may include obtaining the balance of the living expense account through a metering device which is used for monitoring a usage of the life service resource. In an embodiment, an imaging device is disposed on or near the metering device to periodically take photos of the metering device, especially the meter number region. For example, a camera may be disposed on a water meter, an electricity meter, or a gas meter corresponding to the living expense account. Then, the imaging device may transmit the photos to the terminal device via a WiFi module mounted on the imaging device, and the terminal device may perform an image identification process on the photos to obtain the balance of the living expense account. In another embodiment, if the water meter, the electricity meter and the gas meter have a digital display and the WiFi module is capable of acquiring digital data of the meters, the WiFi module may transmit the data of the meters to the terminal device directly.

It should be noted that the balance referred to in the present embodiment may be indicative of the remaining funds in the living expense account or the remaining amount of service resources in the above-mentioned living expense account. For example, when the living expense account is an electricity charge account, the balance may be indicative of remaining funds of electricity charge or remaining amount of electricity in the account; when the living expense account is a water charge account, the balance may be indicative of remaining funds of water charge or remaining amount of water in the account; when the living expense account is a heating charge account, the balance may be indicative of remaining funds of heating charge or remaining amount of heating flow in the account, and so on. It is to be noted that in the present embodiment, the server of the life service department can convert the money stored in the living expense account into the corresponding life service resource, and the remaining funds or the remaining service resource can be displayed to the user through the application program. Accordingly, in some embodiments of the present disclosure, the funds in the living expense account may be a different expression form of the amount of the life service resource in the living expense account.

In step S102, when the balance is less than or equal to the preset threshold value, recharge the living expense account according to a preset recharge path.

In this step, when it is determined that the current balance of the living expense account is less than or equal to the preset threshold, the user's living expense account can be automatically recharged according to the preset recharge path, and the situation that the life service resource is forcibly interrupted (e.g., power outages, water failure and the like) because the user forgets the recharge will be avoided, which greatly facilitates the user's life. If it is determined that the current balance of the living expense account is greater than the preset threshold, the user is not reminded, so as to avoid unnecessary interruptions to the user.

In some embodiments, the above-mentioned preset threshold value may be set according to user requirements, and this disclosure is not limited thereto. For example, a preset threshold value of the remaining funds may be set to 10 dollars, a preset threshold value of the remaining life service resources may be set to 5M of data traffic remained for the mobile phone, and so on.

In some embodiments, the preset threshold value may be set to a lowest threshold of the life service resource when the balance is indicative of the remaining amount of life service resources in the living expense account. For example, when the balance is indicative of the remaining amount of electricity power, the preset threshold may be indicative of a minimum amount of electricity power allowed by the user. When the balance is indicative of the remaining amount of water, the preset threshold may be indicative of a minimum amount of water allowed by the user.

In an embodiment, the preset recharge path is specified by the user in advance. In another embodiment, the preset recharge path is a recharge path which is most commonly used by the user. In still another embodiment, the preset recharge path is a recharge path with the highest discount.

In some embodiments, a recharge password (for example, bank payment password) may be stored in a preset storage path in advance. When it is determined that the terminal device is automatically recharging the living expense account, the recharge password can be read out through the preset storage path to complete the recharging process. In other cases, the preset storage path is forbidden to access.

According to the recharge method provided by the present embodiment, the automatic recharge of the living expense account can be achieved by monitoring the balance of the user's living expense account and automatically recharging the living expense account according to the preset recharge path when the balance is less than or equal to the preset threshold. Thus, the situation that the life service resource is forcibly interrupted when the user forgets to recharge can be avoided, which greatly facilitates the user's life.

Figure 2 is a flowchart illustrating a recharge method according to an exemplary embodiment. On the basis of the above embodiment, the method includes following steps.

In step S201, a balance of a living expense account is monitored.

The specific process of this step is described in the step S101, which will not be elaborated here.

In step S202, a recharge command carrying a preset recharge value is sent to a pre-associated payment platform, when the balance is less than or equal to the preset threshold value, so as to instruct the pre-associated payment platform to recharge the living expense account with a recharge amount corresponding to the preset recharge value.

In this step, when it is determined that the current balance of the living expense account is less than or equal to the preset threshold value, a recharge command is sent to the payment platform previously associated with the living expense account, and the recharge command carries a preset recharge value. After receiving the recharge command, the payment platform recharges the living expense account according to the preset recharge value, and thus completes the recharge process of the living expense account without requiring the user to manually inquire the remaining balance of the living expense account or to manually recharge, which greatly simplifies the user's operation and avoids the situation that the life service resource is forcibly interrupted (such as power outages, water failure and the like). Thus, users' life can be greatly facilitated and user experience can be improved.

In some embodiments, the above-mentioned pre-associated payment platform may be a financial server corresponding to a preset financial account (e.g., a server possessed by Merchants™ Bank where the user's account is opened), or a network server corresponding to the application (APP) having a payment function (e.g., a server possessed by MiPay™). When the above-mentioned pre-associated payment platform is a financial server corresponding to the preset financial account, the application program (i.e., the application for controlling and managing the current living expense account) providing interface of each living expense account may be associated with the financial account in advance, so that all of the living expense accounts on this application can be recharged with commands sent to the financial server corresponding to the financial account at the time of automatic recharge, so as to complete the automatic recharge process for each living expense account.

In some embodiments, when the above-mentioned pre-associated payment platform is a network server corresponding to an APP having a payment function, there may be two implementation manners to complete the automatic recharge of the living expense account.

In the first manner, the APP having the payment function is configured to provide the user with the interface of each living expense account. In other words, the application that controls and manages the current living expense account has the functions of payment and deposit funds. For example, some applications may have financial management functions, and also provide an interface for depositing funds, so that the user can deposit part of the funds in the network server corresponding to the application through the interface. The network server is allowed to recharge the current living expense account according to a preset recharge value, by sending a recharge command carrying the preset recharge value to the network server corresponding to the APP.

In the second manner, the APP having the payment function is associated with another application that controls and manages the current living expense account. In other words, the application that controls and manages the current living expense account does not have the payment function, thus the recharge process for the living expense account may be achieved by its associated APP having such function. That is, the recharge command carrying a preset recharge value can be sent to a network server of the APP having the payment function, which is associated with the application provided with the living expense account, so that the network server can recharge the living expense account according to the preset recharge value.

According to the recharge method provided by the present embodiment, when it is determined that the balance of the acquired living expense account is less than or equal to the preset threshold value, a recharge command carrying the preset recharge value is automatically transmitted to the pre-associated payment platform, so that the pre-associated payment platform can automatically recharge the living expense account according to the preset recharge value, so as to avoid the situation that the life service resource is forcibly interrupted when the user forgets to recharge the living expense account, which greatly facilitates the user's life and improves the user experience.

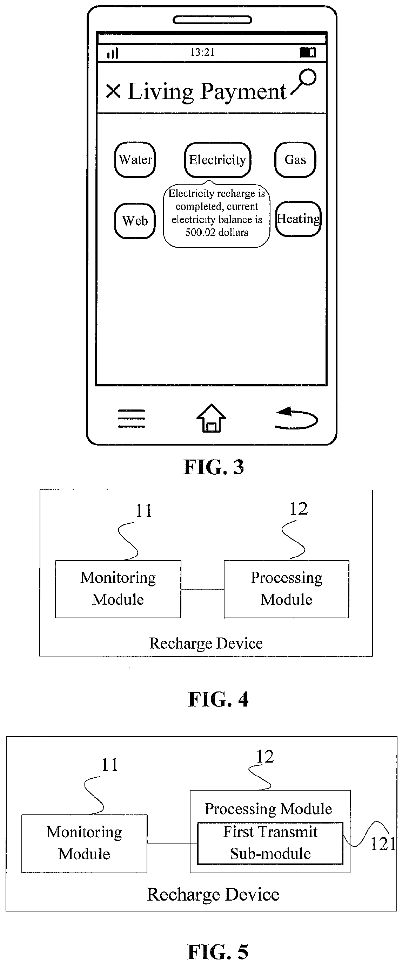

Further, on the basis of the above-described embodiment, after the user's living expense account is automatically recharged according to the preset recharge path, a first prompting message may be output to the user to prompt the user that the living expense account has been automatically recharged. In an embodiment, the first prompt information may also include information on the balance of the living expense account after the completion of the recharge. In other words, after the automatic recharge, the user is prompted about the current balance of the living expense account so that the user is able to know the amount in the living expense account. According to this embodiment, the user can be promptly informed of the completion of the recharge, which is more user-friendly, thus the user experience can be improved. In an embodiment, the first prompting message may be presented to the user in the form of text through an interface, for example, as shown in the interface diagram of Fig. 3. In another embodiment, the user may be prompted by voice or vibration. Embodiments of the present embodiment are not limited to the specific presentation of the first prompt information. In some embodiments, the above recharging process may be performed in the background of the terminal device, and the user may be notified of only the recharging result, and the recharging process is not displayed. In some embodiments, in the recharging process, if it is detected that the financial account used for recharging is insufficient, another prompting message may be output to prompt the user.

In some embodiments, on the basis of the above-described embodiment, it is also possible to output a second prompting message every preset period. The second prompting message may be used to prompt the user of a consumed amount of the living expense account in the preset period, and the consumed amount may be indicative of a consumption of funds or a consumption of the life service resources in the living expense account. For example, it is assumed that the preset period is one month, and the second prompt information is used to indicate how much money or life service resource in the user's current living expense account is consumed within a month, so that the user can be informed of the usage of the life service resource within one month. Thus, appropriate measures can be taken by the user to save life services in the next period, which greatly improves the user experience. In some embodiments, the second prompting message may be presented to the user in the form of text through the interface. Also, the user may be prompted by voice or vibration. Presentation manner of the second prompting message is not limited by the present embodiment. As can be seen from the above description, according to this embodiment, the user can be periodically informed of the consumption of the funds or life service resources in the living expense account during the period, which is more user-friendly, thus the user experience can be improved.

The following is an embodiment of the present disclosure, which may be used to carry out the embodiments of the present disclosure. For the details that are not disclosed in the following embodiments of the present disclosure, reference is made to the above embodiments of the present disclosure.

Figure 4 is a block diagram illustrating a recharge device according to an exemplary embodiment. As shown in Figure 4, the recharge device includes a monitoring module 11 and a processing module 12.

The monitoring module 11 is configured to monitor a balance of a living expense account, wherein the living expense account is an account for obtaining life service resources by paying fees, and the balance is indicative of remaining funds in the living expense account and/or remaining amount of the life service resources in the living expense account.

The processing module 12 is configured to recharge the living expense account according to a preset recharge path when the monitoring module detects that the balance is less than or equal to a preset threshold.

As described above, in the recharge device provided by the present embodiment, the balance of the user's living expense account is monitored through the monitoring module, and the processing module recharges the living expense account according to a preset recharge path when the monitoring module monitors that the balance is less than or equal to the preset threshold. According to the present embodiment, the recharge of the living expense account can be automatically completed, thus the situation that the life service resource is forcibly interrupted when the user forgets to recharge can be avoided, which greatly facilitates the user's life.

Figure 5 is a block diagram illustrating a recharge device according to an exemplary embodiment. On the basis of the embodiment shown in Fig. 5 as described above, the above-described processing module 12 may include a first transmit sub-module 121.

The first transmit sub-module 121 is configured to send a recharge command carrying a preset recharge value to a pre-associated payment platform, so as to instruct the pre-associated payment platform to recharge the living expense account with a recharge amount corresponding to the preset recharge value.

In an embodiment, the above-mentioned pre-associated payment platform includes a financial server corresponding to a preset financial account. In another embodiment, the above-mentioned pre-associated payment platform includes a network server corresponding to the application (APP) having the payment function.

As described above, according to the recharge device provided by the present embodiment, when the monitoring module detects that the balance of the living expense account is less than or equal to the preset threshold, the processing module instructs the first transmission sub-module to automatically send a recharge command with the preset recharge value to the pre-associated payment platform, so that the pre-associated payment platform can automatically recharge the living expense account according to the preset recharge value, and automatically complete the recharge of the living expense account. Thus, the situation that the life service resource is forcibly interrupted when the user forgets to recharge can be avoided, which greatly facilitates the user's life and improves the user experience. In addition, since the payment is achieved through the payment platform associated in advance, security and convenience of the payment can be ensured. Especially when the payment is achieved through the associated financial accounts or the associated APP having the payment function, the associating process is convenient and user-friendly.

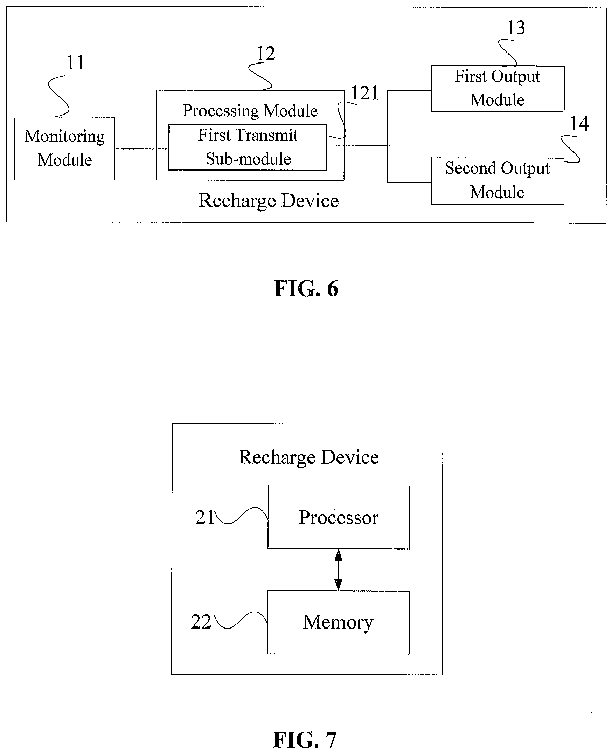

Figure 6 is a block diagram illustrating a recharge device according to an exemplary embodiment. The above-described device may further include a first output module 13 on the basis of the embodiment shown in Figure 5.

The first output module 13 is configured to output a first prompting message for indicating that the living expense account has been charged.

In some embodiments, the first prompting message includes information on the balance of the living expense account after the completion of the recharge.

The above living expense account includes any one of the user's electricity charge account, water charge account, gas charge account, heating charge account, network charge account, cable TV charge account, telephone charge account.

In some embodiments, still with reference to Figure 6, the recharge device may further include a second output module 14.

The second output module 14 is configured to output a second prompting message every preset period, which is used to prompt the user of a consumed amount of the living expense account in the preset period.

In view of the above, according to the recharge device provided by the present embodiment, the user can be promptly informed of the completion of the recharge through the first output module, and it is more user-friendly and the user experience can be improved. At the same time, the user is promptly informed, through the first output module, of situation of the funds or the life service resources in the account after the recharge, which further make the recharge process more user-friendly. In addition, the recharge device outputs the second prompting message through the second output module, which may periodically inform the user about consumption of the funds or life service resources in his/her living expense account in the period, thus the user is able to take appropriate measures timely for savings life service resources during the next period, which greatly improves the user experience.

With respect to the device in the above embodiment, the specific mode in which each module or unit performs the operation has been described in detail in the embodiment relating to the method, and the description thereof will not be described in detail herein.

Figure 7 is a block diagram illustrating a recharge device according to an exemplary embodiment. As shown in Figure 7, the recharge device may include a processor 21 and a memory 22 configured to store instructions executable by the processor 21.

The processor 21 is configured to:
monitor a balance of a living expense account, wherein the living expense account is an account for obtaining life service resources by paying fees, and the balance is indicative of remaining funds in the living expense account and/or remaining amount of the life service resources in the living expense account; and
recharge the living expense account according to a preset recharge path when the balance is less than or equal to a preset threshold value.

In the embodiment of the above-described recharge device, it is to be understood that the processor 21 may be a Central Processing Unit abbreviation: CPU), or may be other general-purpose processors, Digital Signal Processor (referred to as DSP), Application Specific Integrated Circuit (referred to as ASIC) and so on. The general-purpose processor may be a microprocessor or a conventional processor, etc. The memory 22 may be a read-only memory (ROM), a random access memory (read-only memory, referred to as RAM), a flash memory, a hard disk or a solid state disk. The steps of the method disclosed in connection with the embodiments of the present disclosure may be embodied directly in the execution of the hardware processor or by the combination of hardware and software modules in the processor.

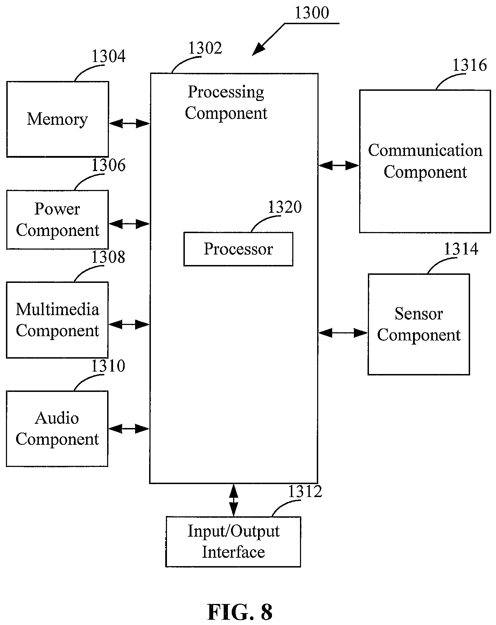

Figure 8 is a block diagram illustrating a recharge device 1300 shown in accordance with an exemplary embodiment. For example, the recharge device 1300 may be a mobile phone, a computer, a digital broadcasting terminal, a messaging device, a game console, a tablet device, a medical device, a fitness device, a personal digital assistant, and so on.

Refer to Fig 8, the recharge device 1300 may include one or more of the following components: a processing component 1302, a memory 1304, a power supply component 1306, a multimedia component 1308, an audio component 1310, an input / output (I / O) interface 1312, a sensor component 1314, and a communication component 1316.

The processing component 1302 usually controls overall operations of the device 1300, such as operations associated with display, telephone calls, data communications, camera operations and recording operations. The processing component 1302 may include one or more processors 1320 to execute instructions to perform all or part of the steps in the above described methods. Moreover, the processing component 1302 may include one or more modules which facilitate the interaction between the processing component 1302 and other components. For instance, the processing component 1302 may include a multimedia module to facilitate the interaction between the multimedia component 1308 and the processing component 1302.

The memory 1304 is configured to store various types of data to support the operation of the device 1300. Examples of such data include instructions for any application or method operated on the device 1300, contact data, phonebook data, messages, pictures, videos, etc. The memory 1304 may be implemented by any type of volatile or non-volatile memory device or combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 1306 provides power to various components of the device 1300. The power component 1306 may include a power management system, one or more power sources, and other components associated with the generation, management, and distribution of power in the device 1300.

The multimedia component 1308 includes a screen for providing an output interface between the device 1300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 1308 includes a front camera and/or a rear camera. The front camera and/or the rear camera may receive external multimedia data while the device 1300 is in an operation mode, such as a photographing mode or a video mode. Each of the front camera and the rear camera may be a fixed optical lens system or have focus and optical zoom capability.

The audio component 1310 is configured to output and/or input audio signals. For example, the audio component 1310 includes a microphone (MIC) configured to receive an external audio signal when the device 1300 is in an operation mode, such as a call mode, a recording mode, and a voice recognition mode. The received audio signal may be further stored in the memory 1304 or transmitted via the communication component 1316. In some embodiments, the audio component 1310 further includes a speaker to output audio signals.

The I/O interface 1312 provides an interface between the processing component 1302 and peripheral interface modules, such as a keyboard, a click wheel, a button, and the like. The button may include, but not limited to: a home button, a volume button, a starting button and a locking button.

The sensor component 1314 includes one or more sensors to provide status assessments of various aspects of the device 1300. For instance, the sensor component 1314 may detect an open/closed status of the device 1300, relative position of components, e.g., the display and the keyboard, of the device 1300, a change in position of the device 1300 or a component of the device 1300, a presence or absence of an user contact with the device 1300, an orientation or an acceleration/deceleration of the device 1300, and a change in temperature of the device 1300. The sensor component 1314 may include a proximity sensor configured to detect the presence of nearby objects without any physical contact. The sensor component 1314 may further include a light sensor, such as a CMOS or CCD image sensor, for use in imaging applications. In some embodiments, the sensor component 1314 may further include an accelerometer sensor, a gyroscope sensor, a magnetic sensor, a pressure sensor, a microwave sensor, or a temperature sensor.

The communication component 1316 is configured to facilitate communication, in a wire or wireless manner, between the device 1300 and other devices. The device 1300 can access a wireless network based on a communication standard, such as WiFi, 2G or 3G, or a combination thereof. In one exemplary embodiment, the communication component 1316 receives a broadcast signal or broadcast associated information from an external broadcast management system via a broadcast channel. In one exemplary embodiment, the communication component 1316 further includes a near field communication (NFC) module to facilitate short-range communications. For example, the NFC module may be implemented based on a radio frequency identification (RFID) technology, an infrared data association (IrDA) technology, an ultra-bandwidth (UWB) technology, a Bluetooth (BT) technology, and other technologies.

In exemplary embodiments, the device 1300 may be implemented by one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components, for performing the above described methods.

In exemplary embodiments, there further provides a non-transitory computer readable storage medium including instructions, such as included in the memory 1304, executable by the processor 1320 in the device 1300, for performing the above described methods. For example, the non-transitory computer-readable storage medium may be a ROM, a random access memory (RAM), a CD-ROM, a magnetic tape, a floppy disc, an optical data storage device and the like.

A non-transitory computer-readable storage medium that enables the recharge device 1300 to perform the above-described recharge method when the commands in the storage medium are executed by a processor of the recharge device 1300, is provided. The method includes:
monitoring a balance of a living expense account, wherein the living expense account is an account for obtaining life service resources by paying fees, and the balance is indicative of remaining funds in the living expense account and/or remaining amount of life service resources in the living expense account; and
recharge the living expense account according to a preset recharge path when the balance is less than or equal to the preset threshold value.

Further, the living expense account is charged according to a preset recharge path by:
sending a recharge command carrying a preset recharge value to a pre-associated payment platform, so as to instruct the pre-associated payment platform to recharge the living expense account with a recharge amount corresponding to the preset recharge value.

In an embodiment, the pre-associated payment platform includes a financial server corresponding to a preset financial account. In another embodiment, the pre-associated payment platform includes a network server corresponding to the application (APP) having the payment function.

Further, after recharging the living expense account according to a preset recharge path ,the method further includes:
outputting a first prompting message indicating that the living expense account has been charged.

In some embodiments, the first prompting message includes information on the balance of the living expense account after the completion of the recharge.

Still further, the method further includes:
outputting a second prompting message every a preset period, wherein the second prompting message is used to prompt the user of a consumed amount of the living expense account in the preset period, and the consumed amount is indicative of a consumption of the funds or a consumption of the life service resources in the living expense account.

## Claims

1. A recharge method, applied to a terminal device, the method comprising:
monitoring (S101) a balance of a living expense account, wherein the living expense account is an account for obtaining life service resources by paying fees, and the balance is indicative of remaining funds in the living expense account and/or a remaining amount of the life service resources in the living expense account; and
recharging (S102) the living expense account according to a preset recharge path when the balance is less than or equal to a preset threshold value.

2. The method of claim 1, wherein monitoring a balance of a living expense account comprises:
sending a query command to a server of a provider providing the life service resource, wherein the query command comprises an identifier of the living expense account and is used for requesting the server of the provider to return the balance of the living expense account to the terminal device; and
receiving the balance of the living expense account from the server of the provider.

3. The method of claim 2, wherein the terminal device sends the query command to the server of the provider at a preset time interval.

4. The method of claim 3, wherein the preset time interval can be adjusted according to a consumption rate of the life service resource.

5. The method of claim 1, wherein monitoring a balance of a living expense account comprises:
obtaining the balance of the living expense account through a metering device which is used for monitoring a usage of the life service resource.

6. The method of claim 1, wherein recharging the living expense account according to a preset recharge path comprises:
sending (S202) a recharge command carrying a preset recharge value to a pre-associated payment platform to instruct the pre-associated payment platform to recharge the living expense account with a recharge amount corresponding to the preset recharge value.

7. The method of claim 6, wherein the pre-associated payment platform comprises any of:
a financial server corresponding to a preset financial account; and
a network server corresponding to an application having a payment function.

8. The method of any one of claims 1 to 7, wherein after recharging the living expense account according to a preset recharge path, the method further comprises:
outputting a first prompting message indicating that living expense account is recharged.

9. The method of claim 4, wherein the first prompting message comprises information on the balance of the living expense account after the living expense account is recharged.

10. The method of claim 1, further comprising:
outputting a second prompting message every preset period, wherein the second prompting message is used to prompt the user of a consumed amount of the living expense account in the preset period, and the consumed amount is indicative of a consumption of the funds or a consumption of the life service resources in the living expense account.

11. A recharge device, comprising:
a monitoring module (11) configured to monitor a balance of a living expense account, wherein the living expense account is an account for obtaining life service resources by paying fees, and the balance is indicative of remaining funds in the living expense account and/or remaining amount of the life service resources in the living expense account; and
a processing module (12) configured to recharge the living expense account according to a preset recharge path when the monitoring module detects that the balance is less than or equal to a preset threshold.

12. The device of claim 11, wherein the processing module (12) comprises a first transmit sub-module (121);
the first transmit sub-module (121) being configured to send a recharge command carrying a preset recharge value to a pre-associated payment platform to instruct the pre-associated payment platform to recharge the living expense account with a recharge amount corresponding to the preset recharge value.

13. The device of claim 11 or 12, further comprising:
a first output module (13) configured to output a first prompting message indicating that the living expense account is recharged.

14. The device of claim 11 or 12, further comprising:
a second output module (14) configured to output a second prompting message every preset period, wherein the second prompting message is used to prompt the user of a consumed amount of the living expense account in the preset period, and the consumed amount is indicative of a consumption of the funds or a consumption of the life service resources in the living expense account.

15. A recharge device, comprising:
a processor (21); and
a memory (22) configured to store instructions executable by the processor;
wherein the processor (21) is configured to perform the recharge method according to any one of claims 1-10.
